# EUROPÄISCHE PATENTSCHRIFT

(11) **EP 3 559 101 B1**
(45) Veröffentlichungstag und Bekanntmachung des Hinweises auf die Patenterteilung: **25.09.2024**
(21) Anmeldenummer: 17835608.5
(22) Anmeldetag: 13.12.2017
(51) Int. Cl.: C08K 3/08

(54) **KOMPOSITMATERIALIEN**
COMPOSITE MATERIALS
MATÉRIAUX COMPOSITES

(30) Priorität: 20.12.2016 DE 102016124943
(43) Veröffentlichungstag der Anmeldung: 30.10.2019
(73) Patentinhaber: INM - Leibniz-Institut für Neue Materialien gemeinnützige GmbH, 66123 Saarbrücken (DE)
(72) Erfinder: KISTER, Thomas, 5702 Niederlenz (CH); KRAUS, Tobias, 66111 Saarbrücken (DE); HUBERTUS, Jonas, 66646 Marpingen (DE)
(74) Vertreter: Patentanwälte Gierlich & Pischitzis Partnerschaft mbB
(86) Internationale Anmeldenummer: PCT/EP2017/082587
(87) Internationale Veröffentlichungsnummer: WO 2018/114517

(56) Entgegenhaltungen:
- EP-A1- 1 621 574
- US-A1- 2011 123 589
- DATABASE WPI Week 201616, Derwent World Patents Index; AN 2015-75463Q, XP002779886
- DATABASE WPI Week 201747, Derwent World Patents Index; AN 2017-37389T, XP002779887

## Beschreibung

### Gebiet der Erfindung

Die Erfindung betrifft ein Kompositmaterial, welches Hohlräume umfasst, in welchen Nanopartikel enthalten sind. Durch Veränderung der Anordnung der Nanopartikel, insbesondere Agglomeration der Nanopartikel, innerhalb der Hohlräume ändern sich die Eigenschaften des Systems innerhalb der Hohlräume und auch die Eigenschaften des gesamten Kompositmaterials. Wenn dieser Prozess reversibel ist, können die Eigenschaften des Kompositmaterials reversibel verändert werden.

### Stand der Technik

Aus dem Stand der Technik sind Polymere bekannt, in denen leitfähige Partikel eingelagert sind. Wenn sich die umgebende Matrix ausdehnt, verändern sich die Abstände zwischen den Partikeln und die Leitfähigkeit des Polymers verändert sich. Dadurch kann beispielsweise durch Änderung der Temperatur die Leitfähigkeit des Polymers eingestellt werden.

Aus der E-Ink-Technologie sind Mikrokapseln mit eingelagerten Pigmenten bekannt, welche durch das Anlegen eines elektrischen Felds innerhalb der Kapseln bewegt werden können. Die Mikrokapseln stellen dabei einzelne Pixel eines Displays dar. Die Farbänderung basiert dabei aus der Farbe der einzelnen Partikel, welche innerhalb der Kapsel nach oben oder unten wandern.

Ebenfalls sind Materialien bekannt, welche eingekapselte Stoffe beinhalten, welche bei Bedarf, z. B. Beschädigung des Materials, freigesetzt werden.

CN105061759 offenbart monodisperse Pd/PANI Nanopartikel, welche gleichmäßig in einer Polyanilinmatrix verteilt sind (Beispiel 1). Die Matrix weist keine Hohlräume auf, welche mit einem Lösungsmittel und Nanopartikel gefüllt sind.

EP1621574A1 offenbart eine Polymermatrix, in welche die Nanopartikel eingearbeitet sind. Die Unterschiede in den optischen Eigenschaften resultieren aus der Glasübergangstemperatur der Polymermatrix. Die Matrix weist keine Hohlräume auf, welche mit einem Lösungsmittel und Nanopartikel gefüllt sind.

US20110123589A1 offenbart eine Polysaccharidmatrix, in welcher metallische Nanopartikel enthalten sind, welche darin gleichmäßig verteilt sind. Es wird die Herstellung, insbesondere die Gellierung, der Gele beschrieben. Eine Agglomeration der Partikel findet gerade nicht statt.

### Aufgabe

Aufgabe der Erfindung ist es, ein Kompositmaterial anzugeben, dessen Eigenschaften durch einen externen Stimulus geändert werden können. Ebenso soll ein Verfahren zur Herstellung des Kompositmaterials angegeben werden.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Aufgabe wird gelöst durch ein Kompositmaterial umfassend eine hydrophile Matrix und Hohlräume, wobei die Hohlräume mindestens eine Art von Nanopartikeln umfassen, wobei mindestens einer der Hohlräume durch Einwirkung von Temperatur als externen Stimulus auf das Kompositmaterial von einem ersten Zustand in einen zweiten Zustand überführt werden kann, wobei sich der erste vom zweiten Zustand in der Anordnung der Nanopartikel innerhalb des mindestens einen Hohlraums unterscheidet und die Nanopartikel bei einem der beiden Zustände agglomeriert vorliegen, wobei die Hohlräume mindestens eine Art von Nanopartikeln und mindestens ein unpolares Lösungsmittel umfassen, wobei die mindestens eine Art von Nanopartikel eine lipophile Oberflächenmodifikation aufweist, wobei die Nanopartikel im Lösungsmittel dispergiert sind.

Der Begriff Hohlraum im Sinne der Erfindung bezeichnet einen von der umgebenen Matrix räumlich abgegrenzten Raum, welcher eine andere Zusammensetzung aufweist, als die ihn umgebende Matrix. Häufig unterscheidet er sich auch in seinen physikalischen Eigenschaften. So ist die Matrix beispielsweise fest, während die Zusammensetzung innerhalb des Hohlraums flüssig oder viskos ist.

Die beiden Zustände unterscheiden sich bevorzugt in einer physikalischen Eigenschaft des Kompositmaterials. Beispielsweise ist diese Eigenschaft ausgewählt aus optische Streuung, Absorption, Streuung von Röntgenstrahlen, magnetische Remanenz, thermische Leitfähigkeit, Wärmekapazität, elektrische Leitfähigkeit, dielektrische Eigenschaften, mechanische Festigkeit oder viskoelastische Eigenschaften, wobei auch mehrere Eigenschaften simultan geändert werden können.

Die Änderung kann beispielsweise zu einer Änderung der Transparenz, Farbe und/oder Leitfähigkeit des Kompositmaterials führen.

der erste vom zweiten Zustand unterscheidet sich mindestens in der Anordnung der Nanopartikel innerhalb der Hohlräume. Die Nanopartikel liegen in einem der beiden Zustände agglomeriert vor.

In einer bevorzugten Ausführungsform der Erfindung ist die Überführung von einem ersten in einen zweiten Zustand reversibel, insbesondere mehrfach reversibel, zum Beispiel mindestens zweimal wiederholbar.

Bei dem externen Stimulus handelt es sich um Temperatur.

In einer Ausführungsform der Erfindung umfassen die Hohlräume mindestens ein Mittel zur Beeinflussung der Anordnung der Nanopartikel bei Einwirkung des Stimulus. In Abhängigkeit zum gewählten Stimulus kann dieses Mittel entsprechend gewählt werden.

Es kann sich um Mittel handeln, welche den Stimulus absorbieren und die Energie auf die Nanopartikel übertragen, welche ihre Anordnung verändern. Im Falle von Temperatur kann das Mittel erstarren und so die Anordnung der darin dispergierten Nanopartikel beeinflussen.

Die Mittel können auch Nanopartikel umfassen, beispielsweise indem sie den Stimulus absorbieren und Energie auf die Ligandenhülle oder andere Bestandteile übertragen.

Bevorzugt sind Mittel, welche zu einer Interaktion mit der Oberfläche der Nanopartikel fähig sind. Dies sind bevorzugt Substanzen, welche mindestens eine Gruppe mit mindestens einem Heteroatom, eine π-Bindung oder ein aromatisches π-System aufweist.

Bei den Nanopartikeln nach der Erfindung handelt es sich um nanoskalige Teilchen, d.h. die Teilchengröße ist kleiner als 500 nm. Unter Teilchengröße wird hier, sofern nicht anders angegeben, der mittlere Teilchendurchmesser gemessen mit TEM bezogen auf mindestens 60 % der Teilchen. Der mittlere Teilchendurchmesser beträgt bevorzugt nicht mehr als 200 nm, besonders bevorzugt nicht mehr als 100 nm, z.B. 0,5 bis 200, bevorzugt 1 bis 100 nm, z.B. 1 bis 50 nm. Zur Bestimmung von sehr kleinen Teilchen in diesem Bereich können auch elektronenmikroskopische Methoden (z.B. über HR-TEM) verwendet werden. Es kann sich gegebenenfalls auch um faserförmige Teilchen handeln. In diesem Fall bezieht sich die mittlere Teilchengröße auf die Länge, die z.B. auch visuell mit mikroskopischen Verfahren ermittelt werden kann. Gerade wenn optische Eigenschaften eine Rolle spielen, können die Nanopartikel aus nur bis zu 10 nm, insbesondere bis zu 5 nm groß sein.

Es müssen ausreichend Nanopartikel innerhalb eines Hohlraums angeordnet sein, so dass die gewünschte Zustandsänderung auch für das Kompositmaterial erreicht wird. Im Falle von Änderung der optischen Eigenschaften, muss die Absorption der Nanopartikel, bzw. ihrer Agglomerate, ausreichend groß sein. Dies kann durch Versuche mit unterschiedlichen Hohlraumgrößen einfach festgestellt werden.

So kann es für rein optische Änderungen ausreichen, wenn die Nanopartikel bezogen auf die Zusammensetzung innerhalb der Hohlräume in einem Anteil von 0,001 bis 5 Gew.-% vorhanden sind, bevorzugt 0,01 bis 2 Gew.-%, insbesondere 0,01 bis 0,1 Gew.-%. Für Goldnanopartikel reichen beispielsweise schon Konzentrationen von 0,05 Gew.-% aus, um eine deutlich sichtbare Änderung der Absorption des Kompositmaterials festzustellen.

Bei den Nanopartikeln handelt es sich insbesondere um nanoskalige, anorganische Feststoffteilchen. Bevorzugt handelt es sich um Nanopartikel aus Metall, einschließlich Metalllegierungen, Metall- oder Halbmetallverbindungen, insbesondere Metallchalkogeniden. Hierfür können alle Metalle oder Halbmetalle (im Folgenden auch gemeinsam als M abgekürzt) eingesetzt werden. Bevorzugte Metalle oder Halbmetalle M für die Metall- oder Halbmetallverbindungen sind z.B. Mg, B, Al, Ga, In, Si, Ge, Sn, Pb, Y, Ti, Zr, V, Nb, Ta, Mo, W, Fe, Cu, Ag, Au, Pt, Pd, Zn, Cd, Ce und La oder Mischungen davon. Es kann eine Art von Nanopartikel oder eine Mischung von Nanopartikeln eingesetzt werden.

Die Nanopartikel können ein Metall, Mischungen aus zwei oder mehr Metallen oder eine Legierung aus zwei oder mehr Metallen umfassen, z. B. FePt. Bevorzugt sind die Metalle ausgewählt aus den Metallen der IUPAC-Gruppen 1 bis 16, sowie der Lanthanoiden, bevorzugt aus den Metallen der Gruppen 4 bis 16, insbesondere Au, Ag, Cu, Pt, Pd, Ni, Ru, In, Rh, Al, Pb, Bi, Te. Die Nanopartikel können auch leitfähige oder halbleitfähige Oxide umfassen. Beispiele für solche Oxide, welche auch dotiert sein können, sind Indium-Zinn-Oxid (ITO) oder Antimon-Zinn-Oxid (ATO). Es können auch Halbleiter der Gruppen II-VI, III-V oder IV oder Legierung solcher Halbleiter sein. Beispiele dafür sind CdS, CdSe, CdTe, InP, InAs, ZnS, ZnSe, ZnTe, HgTe, GaN, GaP, GaAs, GaSb, InSb, Si, Ge, AlAs, PbSe oder PbTe. Es können auch nichtmetallische Nanopartikel sein, beispielsweise aus Oxiden, Sulfiden, Seleniden der vorstehend genannten Metalle. Beispiele dafür sind Cu₂S, Bi₂S₃, Sb₂S₃, SmO₃, PbS. Beispiele sind (gegebenenfalls hydratisierte) Oxide wie ZnO, CdO, SiO₂, GeO₂, TiO₂, ZrO₂, CeO₂, SnO₂, Al₂O₃ (insbesondere Böhmit, AlO(OH), auch als Aluminiumhydroxid), B₂O₃, In₂O₃, La₂O₃, Fe₂O₃, Fe₃O₄, Cu₂O, Ta₂O₅, Nb₂O₅, V₂O₅, MoO₃ oder WO₃; Phosphate, Silicate, Zirconate, Aluminate, Stannate von Metallen oder Halbmetallen, und entsprechende Mischoxide (z.B. Indium-Zinn-Oxid (ITO), Antimon-Zinn-Oxid (ATO), fluor-dotiertes Zinnoxid (FTO), Leuchtpigmente mit Y- oder Eu-haltigen Verbindungen, Spinelle, Ferrite oder Mischoxide mit Perowskitstruktur wie BaTiO₃ und PbTiO₃).

Nanoskalige Teilchen können gewöhnlich auf verschiedene Weise hergestellt werden, z.B. durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren. Diese Verfahren sind in der Literatur ausführlich beschrieben.

Die Nanopartikel können sphärisch sein. Sie können aber auch in Form von Stäbchen vorliegen, beispielsweise mit einem Aspektverhältnis von Länge zu Durchmesser von 20:1 bis 2:1, wobei sich die vorstehend genannten Angaben des Teilchendurchmessers auf die längere Dimension der Teilchen bezieht.

Die Nanopartikel können auch mit mindestens einem anderen Metall oder Halbmetall dotiert sein. In einigen Fällen ist auch ein Nichtmetall geeignet. Zur Dotierung kann jede geeignete Metall- oder Halbmetallverbindung bei der Herstellung der Nanopartikel zugesetzt werden, z.B. ein Oxid, ein Salz oder eine Komplexverbindung, z.B. Halogenide, Nitrate, Sulfate, Carboxylate (z.B. Acetate) oder Acetylacetonate. Das andere Metall kann in der Verbindung in jeder geeigneten Oxidationsvorstufe vorkommen. Beispiele für geeignete Metalle für die Dotierung sind Mg, Ca, Y, Er, Sc, Ce, W, Mo, Zn, Cu, Ag, Au, Sn, In, Fe, Co, Ni, Mn, Ru, Al, Sb, V, Nb, Ir, Rh, Os, Pd und Pt.

Die Hohlräume umfassen ein Dispersionsmittel, in welchem die Nanopartikel dispergiert sind. Dabei handelt es sich um ein Lösungsmittel. Bevorzugt handelt es sich um ein Mittel, in welchem die Nanopartikel beweglich sind. Dies heißt üblicherweise, dass dieses Mittel so viskos ist, dass die Nanoartikel durch das Medium wandern können, um bei Einwirkung ihre Anordnung zu ändern.

Dies können beispielsweise Lösungsmittel sein. Bevorzugt weisen sie einen Siedepunkt von über 80 °C auf, insbesondere über 120 °C auf. Dadurch wird die Diffusion des Lösungsmittels aus den Hohlräumen vermindert. Es kann sich auch um ein Gemisch von Lösungsmitteln handeln.

Es handelt sich um ein unpolares Lösungsmittel. Beispiele für ein polares Lösungsmittel sind Wasser oder Mischungen enthaltend Wasser und organische, vorzugsweise wasserlösliche Lösungsmittel. Besonders bevorzugt handelt es sich bei polaren Lösungsmittel um Wasser oder Mischungen von Wasser und Alkoholen, Aldehyden und/oder Ketonen, besonders bevorzugt um Wasser oder Mischungen aus Wasser mit ein- oder mehrwertigen Alkoholen mit bis zu vier Kohlenstoffatomen, wie z. B. Methanol, Ethanol, n-Propanol, iso-Propanol, Glycerol oder Ethylenglykol, Aldehyden mit bis zu vier Kohlenstoffatomen, wie z. B. Formaldehyd, und/oder Ketonen mit bis zu vier Kohlenstoffatomen, wie z. B. Aceton oder Methylethylketon. Es können aber auch polare organische Lösungsmittel wie Sulfonate oder Tetrahydrofuran verwendet werden.

Als unpolare Lösungsmittel sind organische Lösungsmittel bevorzugt. Bevorzugt sind dies aromatische oder aliphatische Kohlenwasserstoffe mit mindestens 5 Kohlenstoffatomen, wie Petrol-ether, Hexan, Heptan, Decan, Undecan, insbesondere n-Hexan, n-Heptan, n-Decan, n-Undecan, Toluol, Benzol, Cyclopentan, Tetralin, oder Cyclohexan, halogenierte aromatische oder aliphatische Kohlenwasserstoffe wie Dichlormetan, Dichlormethan, Chloroform, Alkylacetate wie Butylacetat, Ketone wie Acetophenon oder Cyclohexanon. Es können auch Gemische der Lösungsmittel verwendet werden.

Bei den Hohlräumen handelt es sich um geschlossene Hohlräume innerhalb der Matrix, in welcher die Nanopartikel angeordnet sind. Diese Hohlräume weisen bevorzugt eine maximale Ausdehnung von 500 µm auf, bevorzugt von bis zu 200 um, insbesondere von bis zu 100 µm auf. Die minimale Ausdehnung der Hohlräume liegt dabei bevorzugt bei mindestens 100 nm, bevorzugt 200 nm, ganz besonders bevorzugt 500 nm. Die Hohlräume müssen im Verhältnis zu den verwendeten Nanopartikeln eine ausreichende Größe aufweisen, dass eine für die Reaktion auf den Stimulus ausreichende Anzahl von Nanopartikeln innerhalb des jeweiligen Hohlraums angeordnet sein kann. Die Größe im Mikrometerbereich kann lichtmikroskopisch bestimmt werden.

Die Hohlräume bleiben während der Änderung zwischen den Zuständen geschlossen. Keine Nanopartikel verlassen die Hohlräume. Die Änderung der Eigenschaften basiert auf einer Veränderung innerhalb der Hohlräume.

Um eine Diffusion der Nanopartikel zu verhindern, ist es wichtig, die Polarität der Matrix, der Nanopartikel, sowie gegebenenfalls des Dispersionsmittels in den Hohlräumen entsprechend zu wählen. Im Falle einer lipophilen Matrix, wie beispielsweise bei organischen Polymeren, sollten die Nanopartikel entsprechend lipophob sein. Analog sollten bei einer hydrophilen Matrix die Nanopartikel hydrophob sein. Dies lässt sich durch eine entsprechende Oberflächenmodifikation der Nanopartikel einstellen.

Zusätzlich sollte das gegebenenfalls in den Hohlräume vorhandene Dispergiermittel entsprechend zu den Nanopartikeln ebenfalls lipophob oder hydrophob sein.

Das Konzept der Hydrophilie/Lipophilie ist dem Fachmann bestens bekannt. Lipophile bzw. hydrophobe Gruppen besitzen die Tendenz, nicht in Wasser einzudringen und darin zu verbleiben, während hydrophile Gruppen die Tendenz besitzen, in Wasser einzudringen und darin zu verbleiben.

Die Eigenschaften der Nanopartikel können über eine entsprechende Oberflächenmodifikation eingestellt werden, beispielsweise durch Verbindungen, welche lipophile Reste an der Oberfläche der Nanopartikel einbringen. Ebenso können die Nanopartikel schon bereits aus der Herstellung, beispielsweise aus einem Sol-Gel-Prozess entsprechende Gruppen aufweisen.

Lipophile Verbindungen oder Gruppen besitzen die Neigung, sich in einem unpolaren Medium, z.B. einem organischen Lösungsmittel, z.B. Hexan oder Toluol, zu dispergieren oder zu lösen, während hydrophile Verbindungen oder Gruppen die Neigung besitzen, sich in einem polaren Medium, z.B. Wasser, zu dispergieren oder zu lösen. Der hydrophile Charakter kann sich, z.B. durch Hydroxy-, Oxy-, Oxid-, Carboxylat-, Sulfat-, Sulfonatfunktionen, allgemein ionische Gruppen oder hydrophile Polyetherketten ergeben, während ein lipophiler Charakter z. B. typischerweise bei Kohlenwasserstoffresten wie Alkylresten oder aromatische Resten vorliegt.

Um die Dispersionsfähgigkeit der Nanopartikel, sowie auch gegebenenfalls die Reaktionsfähigkeit der Nanopartikel auf den Stimulus zu erreichen, können die Nanopartikel eine entsprechende Oberflächenmodifikation aufweisen.

Die Oberflächenmodifizierung der Nanopartikel kann einfach durch Mischen der Teilchen mit dem Oberflächenmodifizierungsmittel erfolgen. Die Umsetzung erfolgt gegebenenfalls in einem Lösungsmittel und, falls notwendig, durch mechanische oder thermische Energiezufuhr und/oder durch Katalysatorzugabe. Die Nanopartikel können solche Modifizierungen auch schon durch ihre Herstellung aufweisen.

Als Oberflächenmodifizierungsmittel eignen sich Verbindungen, die zum einen über eine oder mehrere Gruppen verfügen, die mit der Oberfläche der Nanopartikel oder darauf vorhandenen reaktionsfähigen Gruppen (wie beispielsweise OH-Gruppen) reagieren oder wechselwirken können. Die Oberflächenmodifizierungsmittel können z.B. kovalente, koordinative (Komplexbildung) und ionische (salzartige) Bindungen zur Oberfläche der Nanopartikel ausbilden, während unter den reinen Wechselwirkungen beispielhaft Dipol-Dipol-Wechselwirkungen, Wasserstoffbrückenbindungen und van der Waals-Wechselwirkungen zu nennen sind. Bevorzugt ist die Ausbildung von Wechselwirkungen oder die Komplexierung.

Die Oberflächenmodifizierungsmittel weisen in der Regel ein relativ niedriges Molekulargewicht auf. Beispielsweise kann das Molekulargewicht weniger als 1.500, insbesondere unter 1.000 und vorzugsweise unter 700 und besonders bevorzugt unter 500 betragen, aber auch ein höheres Molekulargewicht, z.B. bis zu 2.000 und mehr, ist möglich.

Für die Oberflächenmodifikation der Nanopartikel kommen anorganische und organische Säuren, Basen, Chelatbildner, Komplexbildner, wie β-Diketone, Aminosäuren oder Silane in Frage.

Das Oberflächenmodifizierungsmittel kann in einer bevorzugten Ausführungsform ein Komplexbildner sein, der durch Komplexierung auf der Oberfläche der Nanopartikel die Modifizierung bildet. Konkrete Beispiele für Oberflächenmodifizierungsmittel sind Thiole, Alkohole, Phosphine, gesättigte oder ungesättigte Mono- und Polycarbonsäuren, die entsprechenden Säureanhydride, Säurechloride, Ester und Säureamide, Aminosäuren, Imine, Nitrile, Isonitrile, Mono- und Polyamine, β-Dicarbonylverbindungen, wie β-Diketone, Oxime, Alkohole, Alkylhalogenide, Metallverbindungen, die über eine funktionelle Gruppe verfügen, die mit der Oberfläche der Partikel reagieren oder wechselwirken kann, z.B. Silane mit hydrolysierbaren Gruppen mit mindestens einer nicht hydrolysierbaren Gruppe.

Die Nanopartikel weisen lipophile Gruppen auf ihrer Oberfläche auf.

Die lipophilen Gruppen, die sich auf der Oberfläche der Nanopartikel befinden, umfassen bevorzugt einen lipophilen Rest, wobei der lipophile Rest insbesondere mindestens 4 und bevorzugt mindestens 5 Kohlenstoffatome aufweist. Konkrete lipophile Gruppen sind lipophile Alkyl-, Alkenyl-, Alkinyl-, Aryl- Aralkyl-, Alkaryl- Etherreste, welche mindestens eine Gruppe zur Bindung an die Oberfläche der Nanopartikel aufweisen. Dies kann beispielsweise mindestens eine Amino-, Alkylamino-, Thiol- Hydroxyl-, Karbonsäure- oder Phosphingruppe sein. Die genannten lipophilen Reste schließen auch entsprechende cyclische Reste ein, wie z.B. Cycloalkyloxyreste. Im Falle von Phosphin ist mindestens ein Rest am Phosphor ein entsprechender lipophiler Rest.

Die lipophilen Reste besitzen bevorzugt einen gesättigten, ungesättigten oder aromatischen, verzweigten oder unverzweigten Kohlenwasserstoffrest mit mindestens 4 und bevorzugt mindestens 5 Kohlenstoffatomen, insbesondere mindestens 8 Kohlenstoffatomen.

Beispiele für bevorzugte Alkylgruppen sind C₄-C₃₀-Alkyl, bevorzugt C₅-C₂₀-Alkyl, wie n-Butyl, i-Butyl, sek-Butyl, tert.-Butyl, lineares oder verzweigtes Pentyl, Hexyl, Heptyl, Octyl, wie 2-Ethylhexyl, Cyclohexyl, Nonyl, Decyl, Undecyl, Dodecyl, Tridecyl, Tetradecyl, Pentadecyl, Hexadecyl, Heptadecyl, Octadecyl, Nonadecyl, Eicosyl. Alkylgruppe kann verzweigt oder bevorzugt linear sein. Beispiele für Alkenylgruppen sind C₄-C₃₀-Alkenyl, bevorzugt C₅-C₂₀-Alkenyl, wie Butenyl, Pentenyl, Hexenyl, Heptenyl, Octenyl, Nonenyl, Decenyl, Undecenyl, Dodecenyl, Tridecenyl, Tetradekenyl, Pentadecenyl, Hexadecenyl, Heptadecenyl, Octadecenyl, Nonadecenyl. Die Alkenylgruppe kann verzweigt oder bevorzugt linear sein, die Doppelbindung kann an beliebiger Stelle sein. Es kann auch mehr als eine Doppelbindung vorhanden sein. Beispiele für Alkinylgruppen sind C₄-C₃₀-Alkinyl, bevorzugt C₅-C₂₀-Alkinyl.

Lipophile Aryl-, Aralkyl- und Alkarylgruppen können z.B. 6 bis 30, bevorzugt 6 bis 15 Kohlenstoffatome aufweisen. Beispiele sind Phenyl, Naphthyl, Tolyl und Benzyl. Geeignete lipophile, Ethergruppen haben z.B. die allgemeine Formel R¹(-OR²)ₓ-, worin R¹ eine lipophile Alkylgruppe ist, R² eine Alkylengruppe, z.B. mit 1 bis 4 Kohlenstoffatomen, wie Ethylen oder Propylen, ist und x eine ganze Zahl von 1 bis 4, bevorzugt 1. oder 2 ist. Die Gruppe R¹ ist bevorzugt eine C₄-C₂₀-Alkylgruppe, wie Butyl, Pentyl, Hexyl, Cyclohexyl, Heptyl oder Octyl.

Die lipophilen Gruppen können teilweise oder vollständig fluoriert vorliegen. Beispiele für fluorierte lipophile C₄-C₂₀-Alkylgruppen sind z. B. C₂F₅-CH₂CH₂, n-C₆F₁₃-CH₂CH₂, n-C₈F₁₇-CH₂CH₂, n-C₁₀F₂₁-CH₂CH₂ i-C₃F₇O-CH₂CH₂CH₂ und n-C₆F₁₃-CH₂CH₂. Gegebenenfalls können auch andere Reste an mindestens einem C-Atom mit Fluor substituiert sein. Sofern die lipophile Gruppe eine solche fluorierte Kohlenwasserstoffkette ist, kann sie auch weniger als 4 Kohlenstoffatome umfassen, z.B. mindestens 1 und bevorzugt mindestens 2 C-Atome.

Die Oberflächenmodifikation kann auch Polymere umfassen welche über die vorgenannten Gruppen an die Oberfläche der Partikel binden. Die können beispielsweise Polyethylenglycol-Derivate sein, Polyvinylalkohol, Polyacetylate, Polyimide, Polyvinylketone, Polymethacrylate, Dextrane, Biopolymere wie Cellulose, Chitosan oder Heparin.

Die Wahl der Oberflächenmodifikation kann entsprechend an die Nanopartikel angepasst werden. Es können auch Gemische von Oberflächenmodifikationen eingesetzt werden.

Die Oberflächenmodifikation sowie die Nanopartikel werden abhängig vom gewählten Stimulus gewählt.

Bevorzugt wird die Oberflächenmodifikation so eingesetzt, dass auf der Oberfläche der Partikel mindestens eine dichte Monolage bildet. Bei einer Partikelgröße von 4 nm sind dies beispielsweise 300 bis 1800 Liganden pro Partikel. Die Dichte der Liganden auf der Oberfläche der Partikel beträgt beispielsweise 2-8 Liganden/nm².

So sind beispielsweise auch Oberflächenmodifikationen möglich, welche irreversibel zerfallen, z. B. photolytisch abspaltbare Liganden, welche auf diese Weise eine irreversible Veränderung der Anordnung, z. B. Agglomeration, führen können, dies können beispielsweise Gruppen auf der Basis von Photoinitiatoren sein, wie alpha-Hydroxyketone. Es kann sich auch um thermisch abspaltbare Gruppen handeln, wie Azo-Initiatoren wie AIBN oder Derivate davon, Benzoylperoxid.

Die Oberflächenmodifikation kann Kombinationen von Liganden umfassen. So ist es beispielsweise möglich über Modifikation mit funktionalen Silanen, wie Aminosilanen, die Oberfläche der Nanopartikel mit funktionellen Gruppen auszustatten, an welche dann weitere Moleküle, Oligomere oder Polymer gekoppelt werden können.

Es ist auch möglich, dass die Hohlräume einen separaten Akzeptor für den Stimulus umfassen, welcher die Energie auf die Nanopartikel, welche die Anordnung ändern, überträgt. Dies können beispielsweise magnetische Nanopartikel sein, welche einen magnetischen Stimulus übertragen können.

Auch die Nanopartikel selbst können geeignet sein einen Stimulus zu absorbieren.

Im Falle von optischen Stimuli können das Partikel sein, welche die entsprechenden Wellenlängen absorbieren, wie beispielsweise plasmonische Partikel aus Gold, Silber, Kupfer, Platin und anderen Münzmetallen sowie Aluminium und anderen Leichtmetallen, Halbleiter-Nanopartikel, die durch ihre geringe Größe als "Quantenpunkte" Absorption und Fluoreszenz zeigen, zum Beispiel Cadmiumselenid, Cadmiumsulfid, Cadmiumtellurid, Bleisulfid, Silizium und andere oder dotierte Oxidpartikel mit intensiven Absorptionsbanden, zum Beispiel Metall- und Halbleiteroxide, die mit Übergangsmetallen dotiert wurden. Weitere Beispiele für solche Partikel sind bei den Nanopartikeln genannt.

Für magnetische Stimuli sind besonders bevorzugt superparamagnetische Partikel aus Eisenoxiden, Nickel und anderen magnetischen Elementen.

Für die Stimulation durch Mikro- und Radiowellen sind besonders Nanopartikel aus Gold, Silber, Kupfer, und den anderen Münzmetallen bevorzugt, aber alle Metalle oder hoch dotierte Halbleiter mit hinreichender Ladungsträgerdichte und -mobilität sind geeignet, wie Fe₃O₄@SnO₂:Er³⁺, Yb³⁺).

Es kann sich auch um Nanopartikel umfassend mehr als eines der genannten Materialien handeln. Beispielsweise um Kern-Hülle-Nanopartikel, welche im Kern und an der Oberfläche aus unterschiedlichen Materialien bestehen. Beispiele dafür sind beispielsweise "upconversion"-Nanopartikel, welche einen dotierten oxidischen Kern und eine metallische Hülle umfassen.

Die Absorption des Stimulus durch Absorption kann beispielsweise eine lokale Erwärmung der Nanopartikel hervorrufen, beispielsweise bei magnetischen Nanopartikeln. Dann sind als Liganden alle Moleküle bevorzugt, die fest auf die Nanopartikel angebunden werden können und die allein oder als Ligandenhülle eine Wechselwirkung mit dem sie umgebenden Lösemittel aufweisen, die von der Temperatur abhängt. Beispiele sind selbstangeordnete Monolagen ("SAM") aus Thiolen oder Aminen für Münzmetalle.

Der Stimulus kann auch die Ladung der Nanopartikel verändern oder freie Ladungsträger freisetzen. Dann sind als Liganden alle Moleküle bevorzugt die fest auf die Nanopartikel angebunden werden können und die allein oder als Ligandenhülle freie Ladungsträger aufnehmen können und dadurch oder durch die Ladung des Partikels ihre Wechselwirkung mit dem sie umgebenden Lösemittel verändern.

Der Stimulus kann auch auf die Oberflächenmodifikation wirken, wobei der Nanopartikel synergistisch wirken kann. Dann sind als Liganden alle Moleküle bevorzugt, die durch den Stimulus allein oder als Ligandenhülle ihre Wechselwirkung mit dem sie umgebenden Lösemittel verändern.

So kann beispielsweise die Fluoreszenz von Nanopartikeln nach Absorption photoaktive Liganden anregen, welche ggf. unter Zerfall die Anordnung der Nanopartikel verändern.

Durch den Stimulus können auch an die Nanopartikel und/oder ihre Ligandenhülle gebundene Stoffe freigesetzt werden. Beispielsweise durch Änderung der Ladung oder Konformation können in der Ligandenhülle adsorbierte oder nicht-kovalent gebundene Stoffe in das Lösungsmittel des Hohlraums abgegeben werden. Im Falle von Farbstoffen kann so beispielsweise eine Farbänderung hervorgerufen werden.

In einer bevorzugten Ausführungsform der Erfindung ist der Stimulus Temperatur, d.h. das Kompositmaterial wird erwärmt oder abgekühlt.

Aus Born et al. Physical Review E 2013, 062313 und Geyer et al. Physical Review Letters 2012, 109, 128302 ist bekannt, dass die Agglomeration von Goldpartikeln in Abhängigkeit von der Temperatur durch die Wahl des Liganden gesteuert werden kann. So steigt beispielsweise in Abhängigkeit von der Kettenlänge von Alkylliganden auch die Temperatur bei der die Agglomerate gebildet werden.

In der Regel wird dies dadurch erreicht, dass sich die Ligandenhülle um die Nanopartikel in Abhängigkeit von der Temperatur verändert und so die Stabilität der Partikeldispersion verändert. Dies wird in unpolaren Medien mit lipophiler Oberflächenmodifikation erreicht, insbesondere für metallische Partikel. Die Hohlräume umfassen erfindungsgemäß mindestens eine Art von Nanopartikeln und mindestens ein unpolares Lösungsmittel, wobei die mindestens eine Art von Nanopartikel eine lipophile Oberflächenmodifikation aufweisen. Das Matrixmaterial ist dann entsprechend bevorzugt lipophob.

Bevorzugte Oberflächenmodifikationen sind dabei lipophile Alkyl-, Alkenylgruppen, welche mindestens eine Thiol-, Amino- oder Hydroxylgruppe aufweisen. Es können auch noch zusätzlich Phosphine, wie Triphenylphosphin, verwendet werden.

Ob eine bestimmte Kombination aus modifiziertem Nanopartikel und Lösungsmittel bei der gewünschten Temperatur die Überführung zwischen den Zuständen erlaubt, lässt sich auf einfache Weise schon in der Dispersion überprüfen, ehe das Kompositmaterial hergestellt wird. Überraschenderweise sind die Ergebnisse aus der Dispersion auf das Kompositmaterial übertragbar.

Da sich mit der Agglomeration insbesondere von metallischen Partikeln das Oberflächenplasmon ändert, tritt beispielsweise eine Farbänderung des Kompositmaterials auf. Bevorzugt sind daher plasmonische Nanopartikel, insbesondere Au, Ag oder Cu, ganz besonders Au.

Das Kompositmaterial umfasst außerdem eine Matrix. Es kann sich um eine organische, anorganisch oder organisch modifizierte Matrix handeln. Dies können dem Fachmann bekannte organische Polymere oder entsprechende Oligomere sein, z. B. Polyacrylate, Polymethacrylate, Polyolefine, z.B. Polybutadien, Polystyrol, Polyamide, Polyimide, Polyvinylverbindungen, wie Polyvinylchlorid, Polyvinylalkohol, Polyvinylbutyral, Polyvinylacetat und entsprechende Copolymere, z. B. Poly(ethylenvinylacetat), Polyester, z. B. Polyethylenterephthalat oder Polydiallylphthalat, Polyarylate, Polycarbonate, Polyether, z. B. Polyoxymethylen, Polyethylenoxid oder Polyphenylenoxid, Polyetherketone, Polysulfone, Polyepoxide, Epoxidharze und Fluorpolymere, z. B. Polytetrafluorethylen. Es können funktionelle Gruppen enthalten sein, um die Lipophilie oder Hydrophilie der Matrix gegenüber dem Inneren der in der Matrix angeordneten Hohlräume einzustellen.

Bei der Matrix kann es sich um eine Polysaccharidmatrix handeln, bevorzugt sind die Polysaccharide ausgewählt aus der Gruppe umfassend Celluloseester, Celluloseether, Cellulosehydrat, Agarose, Chitin, Chitosan, Dextran oder Kombinationen davon. Optional können die vorgenannten Polysaccharide vernetzt sein. Die Polysaccharidmatrix kann auch modifiziert sein, beispielsweise mit den vorgenannten Polymeren.

Wenn eine optische Transparenz gefordert ist, kann es erforderlich sein, den Brechungsindex der Matrix und des Inneren der Hohlräume entsprechend anzupassen. Dies kann beispielsweise durch Beimischung der entsprechenden Additive zur Matrix, wie beispielsweise optische aktive Füllstoffe oder Lösungsmittel, geschehen.

In einer weiteren Ausführungsform der Erfindung werden die Hohlräume im Kompositmaterial durch Mikrokapseln und/oder Nanokapseln gebildet. Die Herstellung von Mikrokapseln und/oder Nanokapseln ist im Stand der Technik bekannt, beispielsweise durch Grenzflächenpolymerisation. Die Kapseln können dann entsprechend in die Matrix eingebracht werden.

Die Erfindung betrifft außerdem ein Verfahren zur Herstellung von erfindungsgemäßen Kompositmaterialien. Dazu wird im ersten Schritt eine Emulsion umfassend Nanopartikel in der dispersiven Phase, wobei die Nanopartikel eine lipophile Oberflächenmodifikation aufweisen, bereitgestellt. Danach wird eine Mischung der hydrophile Matrix oder eines Matrixvorläufers und der Emulsion hergestellt und die Matrix verfestigt, wobei die Mizellen der Emulsion Hohlräume in der Matrix bilden, welche mit der dispersiven Phase der Emulsion gefüllt sind.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Die Emulsion umfasst dabei auch Dispersionsmittel zur Stabilisierung. Es kann sich um eine O/W- oder eine W/O-Emulsion handeln. Bevorzugt ist eine O/W-Emulsion. Dabei ist die hydrophobe Phase die disperse Phase.

Eine verwendete Emulsion besteht bevorzugt aus einer wässrigen und einer öligen Phase. Für die wässrige Phase sind Wasser oder Mischungen enthaltend Wasser und organische, vorzugsweise wasserlösliche Lösungsmittel bevorzugt. Besonders bevorzugt handelt es sich bei der wässrigen Phase um Wasser oder Mischungen von Wasser und Alkoholen, Aldehyden und/oder Ketonen, besonders bevorzugt um Wasser oder Mischungen aus Wasser mit ein- oder mehrwertigen Alkoholen mit bis zu vier Kohlenstoffatomen, wie z. B. Methanol, Ethanol, n-Propanol, iso-Propanol, Glycerol oder Ethylenglykol, Aldehyden mit bis zu vier Kohlenstoffatomen, wie z. B. Formaldehyd, und/oder Ketonen mit bis zu vier Kohlenstoffatomen, wie z. B. Aceton oder Methylethylketon.

Die Ölphase ist bevorzugt mindestens ein organisches Lösungsmittel, welches nicht in der wässrigen Phase löslich ist. Bevorzugt sind dies aromatische oder aliphatische Kohlenwasserstoffe mit mindestens 5 Kohlenstoffatomen, wie Petrol-ether, Hexan, Heptan, Decan, Undecan, insbesondere n-Hexan, n-Heptan, n-Decan, n-Undecan, Toluol, Benzol, Cyclopentan, Tetralin, oder Cyclohexan, halogenierte aromatische oder aliphatische Kohlenwasserstoffe wie Dichlormetan, Dichlormethan, Chloroform, Alkylacetate wie Butylacetat, Ketone wie Acetophenon oder Cyclohexanon. Es können auch Gemische der Lösungsmittel verwendet werden. Bevorzugt sind Lösungsmittel mit einem Siedepunkt von über 80 °C, insbesondere über 120 °C.

Bevorzugt sind für beide Phasen der Emulsion Lösungsmittel mit einem Siedepunkt von über 80 °C.

Das Matrixmaterial stellt die nicht disperse Phase der Emulsion dar. Dies bedeutet, dass das Matrixmaterial bevorzugt ebenso lipophil oder hydrophil ist. Die Nanopartikel, welche ggf. wie vorstehend beschrieben oberflächenmodifiziert sein können, sind in der dispersen Phase angeordnet.

Bevorzugt handelt es sich um eine Mikroemulsion oder Nanoemulsion. Die disperse Phase der Emulsion gibt dabei die Form der Hohlräume im späteren Kompositmaterial vor.

Die disperse Phase umfasst daher schon alles, was zur späteren Überführung von einem ersten in einen zweiten Zustand notwendig ist.

Dem Fachmann sind Möglichkeiten bekannt, die Größe der Mizellen einer Emulsion zu beeinflussen. Dies kann beispielsweise durch selektives Verdampfen der dispersen Phase geschehen, durch Filtrieren und/oder durch Einbringen von Scherkräften wie z. B. durch Ultra Turrax. Das Verfahren kann auch mehrere dieser Schritte und Kombinationen davon umfassen.

Das Dispersionsmittel kann entsprechend der Emulsion und den Nanopartikeln gewählt werden. Beispiele für nichtionische Disperionsmittel sind Polyoxyethylenether, wie Lauryl-, Oleyl-, Stearyl- oder Tridecylether.

Das Dispersionsmittel wird bevorzugt oberhalb der kritischen Mizellbildungskonzentration (CMC) insbesondere bezogen auf die gewählte Temperatur eingesetzt.

Transparente Emulsionen können entweder durch entsprechend kleine Mizellen oder Anpassung der Brechungsindizes der Phasen der Emulsion erreicht werden. Bevorzugt ist die Anpassung der Brechungsindizes.

Danach wird eine Mischung der Matrix oder eines Vorläufers davon und der Emulsion hergestellt. Ein Vorläufer der Matrix kann beispielsweise ein Monomer oder Oligomer sein, welches erst noch durch Polymerisation gehärtet werden muss. Es kann sich auch um das Matrixmaterial handeln, wenn es z. B. bei erhöhter Temperatur flüssig vorliegt oder erst durch späteren Entzug von Lösungsmittel aushärtet.

In einem nächsten Schritt wird die Matrix verfestigt. Dies kann in Abhängigkeit von der Matrix jede physikalische oder chemische Reaktion sein, welche zur Stabilisierung der Matrix und damit zum Einschluss der Mizellen in die Matrix führt. Es kann sich um Abkühlung der Matrix handeln oder um Polymerisationsreaktionen.

Aus dem Verfahren erhält man ein erfindungsgemäßes Kompositmaterial, wobei die vorstehend für das Kompositmaterial genannten bevorzugten Ausführungsformen auch für das Herstellungsverfahren gelten.

Das erfindungsgemäße Kompositmaterial ist in Abhängigkeit vom gewählten Stimulus auf viele Weise einsetzbar.

Es kann beispielsweise als Sensormaterial für den Stimulus eingesetzt werden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: Schematische Darstellung des Kompositmaterials im ersten Zustand (a) und im zweiten Zustand (b);
- Fig. 2: UV-Vis-Spektren verschiedener Partikeldispersionen bei 10 °C und 50 °C, bzw. 52 °C;
- Fig. 3: UV-Vis-Spektren verschiedener hergestellter Kompositmaterialien bei 10 °C und 50 °C;
- Fig. 4: SAXS Messung der Partikeldispersion von a) Goldnanopartikeln (3,62 nm) mit PPh₃ und C₁₂-Thiol; c) der zugehörige Strukturfaktor; b) SAXS-Messung von Goldnanopartikeln (3,98 nm) mit PPh₃ und C₁₂-Thiol; d) der zugehörige Strukturfaktor;
- Fig. 5: SAXS Messung der Partikeldispersion von a) Goldnanopartikeln (1,88 nm) mit C₆-Thiol; c) der zugehörige Strukturfaktor; b) SAXS-Messung von Partikeldispersionen von Goldnanopartikeln (2,65 nm) mit C₁₆-Thiol; d) der zugehörige Strukturfaktor;
- Fig. 6: SAXS Messung der Komposite mit a) Goldnanopartikeln (3,62 nm) mit PPh₃ und C₁₂-Thiol; c) der zugehörige Strukturfaktor; b) SAXS-Messung der Komposite mit Goldnanopartikeln (3,98 nm) mit PPh₃ und C₁₂-Thiol; d) der zugehörige Strukturfaktor;
- Fig. 7: SAXS Messung der Kompositmaterialien mit a) Goldnanopartikeln (1,88 nm) mit C₆-Thiol; b) der zugehörige Strukturfaktor;
- Fig. 8: SAXS Messung des Kompositmaterials 3,98 nm PPh₃ C16 für 5 Temperaturzylken (a) bis (e);
- Fig. 9: SAXS Messung des Kompositmaterials 3,62 nm PPh₃ C12 für 5 Temperaturzylken (a) bis (e);

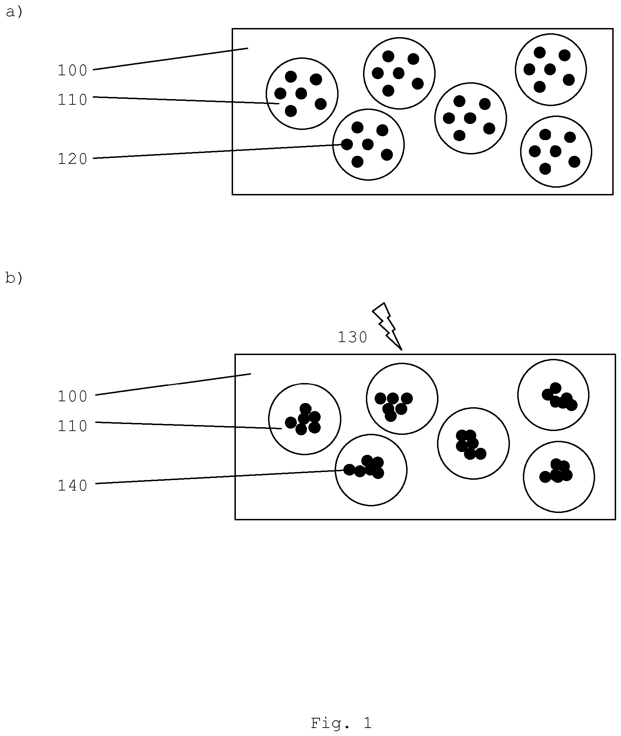

Figur 1 zeigt eine bevorzugte Ausführungsform der Erfindung. Das Kompositmaterial umfasst ein Matrixmaterial 100 in dem Hohlräume 110 angeordnet sind. In diesen Hohlräumen sind Nanopartikel 120 angeordnet (Figur 1 a)). Bei Einwirkung eines externen Stimulus 130 auf das Kompositmaterial kommt es zur Bildung von Agglomeraten 140 innerhalb der Hohlräume 110. Durch diese Änderung kommt auch zu einer Änderung einer Eigenschaft des Kompositmaterials. Beispielsweise ändert sich Absorption in einem bestimmten Wellenlängenbereich. Der Stimulus muss durch die Matrix 100 zu den Nanopartikeln 120 übertragen werden, d.h. die Matrix muss für den Stimulus durchlässig sein oder diesen entsprechend weitergeben können.

Für die Experimente wurden Nanopartikel aus Gold verwendet. Als Matrixmaterial wurde Agarose verwendet. Agarose ist stabil gegenüber organischen Lösungsmitteln und einfach zu handhaben.

### Material und Methoden

### Small-Angle X-Ray Scatternig (SAXS)

Die Messungen wurden an einem Xenocs Xeuss 2.0 mit einem Dectris Pilatus 3 1 MR-Detektor mit einer Auflösung von 981 x 1043 Pixel und einer Pixelgröße von 172x172 µm² aufgenommen. Die Entfernung der Probe zum Detektor betrug ungefähr 1240 mm. Bei Agglomeration der Nanopartikel im Kompositmaterial kann ein zusätzlicher Strukturfaktor gemessen werden. Die Daten wurden mit SASfit 0.94.6 ausgewertet.

Zur Messung der Dispersionen wurden Kapillaren aus Polyimid verwendet. Reines Lösungsmittel wurde als Hintergrund gemessen. Für die Messung der Komposite wurden von den Materialien 1 mm dünne Schreiben abgeschnitten und vermessen. Proben ohne Partikel wurden als Hintergrund vermessen.

### UV-Vis-Spektroskopie

Die Messungen wurden an einem HR 2000+ High Resolution Spectrometer von Oceans Optics Inc. mit einer Mikropack DH-2000-BAL UV-VIS-NIR Lightsource durchgeführt. Es wurde die Absorption und Streuung (Haze) gemessen.

Für die Messungen der Dispersionen wurden diese verdünnt. Reines Lösungsmittel wurde als Hintergrund gemessen. Für Kompositmaterialien wurde diese direkt in den Küvetten hergestellt.

### Herstellung der Goldnanopartikel

Die Nanopartikel wurden gemäß literaturbekannter Methoden hergestellt. Eine orangene Lösung aus HAuCl₄ und Oleylamin ((Z)-Octadec-9-enylamine) in Benzol, Toluol Hexan oder Pentan wurde mit einem Überschuss an Tert-Butylamin-Boran-Komplex (TBAB) in Oleylamin und Benzol oder Hexan vermischt. Die Mischung wurde mit Ultraschall behandelt, um das Reduktionsmittel TBAB aufzulösen. Der Anteil und das verwendete organische Lösungsmittel beeinflusst die Größenverteilung der erhaltenen Partikel. Mit dieser Reaktion werden Goldnanopartikel erhalten, welche über die verwendeten Amine stabilisiert werden.

Um die Eigenschaften der Partikel anzupassen, können die Aminoliganden gegen Gruppen ausgetauscht werden, welche stärker an die Oberfläche der Goldpartikel binden, beispielsweise gegen Phosphine, wie Triphenylphosphin oder Thiole, wie Alkylthiole.

Beispielsweise wurde eine Lösung aus 25 mg AuCl₄ in 2,5 ml Oleylamine (70 %) und 2,5 ml Lösungsmittel mit einer Lösung aus 15 mg TBAB, 1,5 ml Oleylamine und 1,5 ml Lösungsmittel vermischt. Die Mischung wurde bei konstanter Temperatur für 60 Minuten gerührt. Danach wurden die erhaltenen Partikel durch die Zugabe von Ethanol ausgefällt. Die Mischung wurde bei 4000 rpm bei Raumtemperatur zentrifugiert. Der Überstand wurde entfernt und die Partikel im reinen Lösungsmittel suspendiert.

Zum Ligandenaustausch wurden die Suspension auf 90 °C erhitzt und der neue Ligand, beispielsweise Thiol, Phosphin oder eine Mischung beider zugegeben. Bei einer Mischung wurde das Phosphin zuerst zugegeben. Die Suspension wurde wieder auf Raumtemperatur abgekühlt, die Partikel ausgefällt und in Dekan resuspendiert.

Als Liganden wurden 1-Hexanthiol (C6), 1-Dodekanthiol (C12), 1-Hexadekanthiol (C16) oder Triphenylphosphin, sowie Mischungen verwendet. Als Lösungsmittel für die Partikel wurde immer Dekan verwendet.

Die C16-Thiole stabilisieren Goldnanopartikel mit einem Durchmesser von 2.65 nm. Die Übergangstemperatur für die Agglomeration lag dabei für Hexan bei 35 °C. In Tetradekan liegt diese Temperatur bei 42 °C.

Über die Wahl des Liganden und der Lösungsmittel kann die Übergangstemperatur entsprechend angepasst werden. Eine Übersicht zeigt die Tabelle 1. Dabei bedeutet + die Bildung von Agglomeraten bei der entsprechenden Temperatur und - das Fehlen von Agglomeraten.

Die Systeme können in zwei Typen eingeteilt werden. Wenn die Schmelztemperatur der Ligandenhülle des Nanopartikels oberhalb der Agglomerationstemperatur liegt, wird das System als ligand-dominated bezeichnet. Wenn die Agglomerationstemperatur oberhalb der Schmelztemperatur der Ligandenhülle liegt wird das System als particle-dominated bezeichnet. Von den verwendeten Systemen in Tabelle 1 sind 3,98 nm und 2,65 ligand-dominated und 3,62 nm und 1,88 nm particle-dominated.

### Emulsionen

Zur Herstellung des Kompositmaterials wurden zunächst Emulsionen mit Mizellen gemäß der gewünschten Größe der Hohlräume im Kompositmaterial hergestellt.

Dabei wurde als nichtionisches Tensid Triton X165 (Octylphenol Ethoxylat) verwendet. Dieses Tensid hat eine kritische Mizellbildungskonzentration (CMC) von 570 ppm bei 25 °C.

Transparente Emulsionen können entweder durch entsprechend kleine Mizellen oder Anpassung der Brechungsindizes der Phasen der Emulsion erreicht werden.

Zur Herstellung von transparenten Emulsionen mit kleinen Mizellen wurden 14 ml Milliporewasser und 2 ml Trition X165 (6,25 CMC) gemischt. Dazu wurden 4 ml Hexan und 100 µl Nanopartikeldispersion (6 mg Gold/ml) in Dekan gegeben. Die Mischung wurde mit Ultra Turrax bei 24000 rpm für 20 Minuten behandelt. Es wurde eine Emulsion mit einer Mizellengröße von bis zu 25 µm erhalten. Die Emulsion wurde über Spritzenfilter Chromafil RC 45/25 (Porengröße 450 nm) und dann Spritzenfilter Chromafil RC 20/25 (Porengröße 200 nm) filtriert. Die erhaltenen Emulsion zeigten eine maximale Mizellengröße von 2 µm auf. Die Emulsion wurde auf 60 °C erhitzt und mit 1000 rpm gerührt. Sobald eine ausreichend kleine Mizellengröße erreicht war, wurde die Emulsion transparent.

Zur Herstellung von transparenten Emulsionen durch Anpassung der Brechungsindizes (index matching) wurde eine Mischung aus 4 ml Wasser, 6 g Glycerol (Propantriol), 1 ml Trition X165 und 1 ml Goldnanopartikeldispersion in Dekan mit einem Magnetrührer bei 1600 rpm für 5 Minuten gerührt. Man erhielt eine homogene transparente Emulsion.

Transparente Emulsionen aus den Disperionen nach Tabelle 1 für Partikel mit 3,98 nm, 3,62 nm und 1,88 nm wurden mit Anpassung der Brechungsindizes hergestellt. Für die Emulsion mit 2,65 nm Partikeln wurde die Transparenz durch die Bildung von kleinen Mizellen erreicht.

### Herstellung des Kompositmaterials

100 mg Agarose wurde zu 2 ml der hergestellten Emulsionen gegeben. Die Mischung wurde in einem vorgeheizten Aluminiumblock bei 112 °C gerührt. Die Agarose wurde für 4:30 Minuten gekocht. Bei den Proben mit Anpassung der Brechungsindizes wurden 120 mg Agarose und 2 ml der jeweiligen Emulsion verwendet. Diese Mischungen wurden für 4:30 Minuten bei 125 °C behandelt. Die Mischung wurde im Falle der UV-Vis-Messungen direkt in den Messküvetten erhitzt.

Die Mischungen wurde danach in einem Ultraschallbad entgast (45 °C, 20 s).

### Ergebnisse

Alle Angaben in den Figuren beziehen sich auf Dispersionen gemäß Tabelle 1, sowie Kompositmaterialien, welche mit diesen Dispersionen hergestellt wurden. Zur Charakterisierung ist jeweils die Partikelgröße und der verwendete Ligand angegeben.

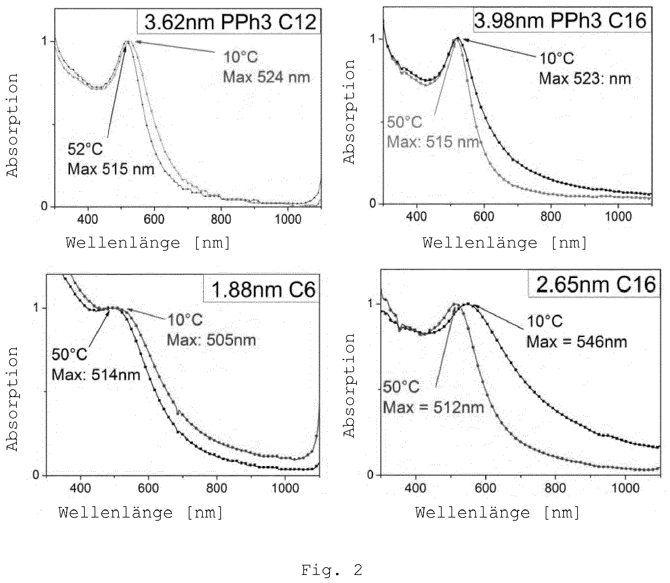

Figur 2 zeigt UV-Vis-Spektren (jeweils auf 1 normiert) für unterschiedliche Partikeldispersionen aus Tabelle 1 bei 10 °C und 50 °C, bzw. 52 °C. Die Partikeldurchmesser, sowie den jeweiligen Liganden sind im Spektrum angegeben. Es zeigt sich, dass es in allen Fällen zu einer Verschiebung des Maximums des Spektrums kommt. Dies deutet auf die Bildung von Agglomeraten hin. Die kühlen Dispersionen zeigen außerdem eine höhere Absorption bei 550 nm bis 1100 nm. Auch dies deutet auf die Bildung von Agglomeraten hin.

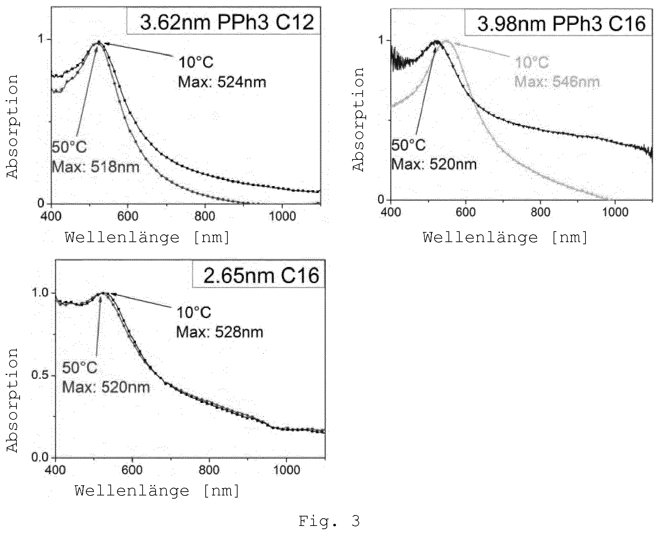

Figur 3 zeigt UV-Vis-Spektren hergestellter Komposite mit den entsprechenden Dispersionen. Auch im Komposit ist die Verschiebung des Maximums deutlich zu erkennen.

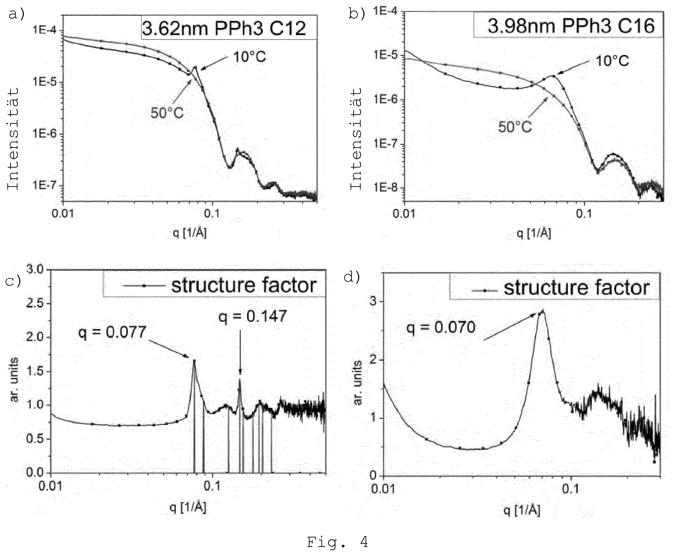

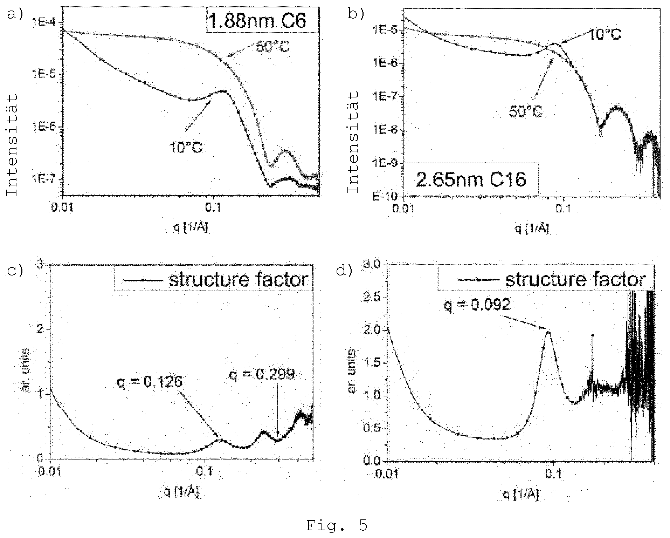

Die Figuren 4 und 5 zeigen SAXS-Messungen hergestellter Partikeldispersionen bei 10 °C und 50 °C, sowie die daraus resultierenden Strukturfaktoren. Die Strukturfaktoren zeigen dabei eindeutig, dass sich bei niedrigen Temperaturen Agglomerate bilden. Ein q-Wert von 0,07 Å⁻¹ in Figur 4 d) entspricht einer Entfernung der Partikelzentren von durchschnittlich 8,9 nm. Die q-Werte von 0,077 Ä und 0,147 Ä in Figur 4c) entsprechen Abständen von 8,15 nm, bzw. 4,27 nm. Dies deutet darauf hin, dass sich in diesem Fall die Partikel im Agglomerat teilweise in einem fcc-Gitter anordnen. Ein q-Wert von 0,126 Å¹ in Figur 5c) steht für einen Abstand von 5,0 nm. Der q-Wert von 0,092 Å⁻¹ in Figur 5 d) steht für einen Abstand von 6,8 nm.

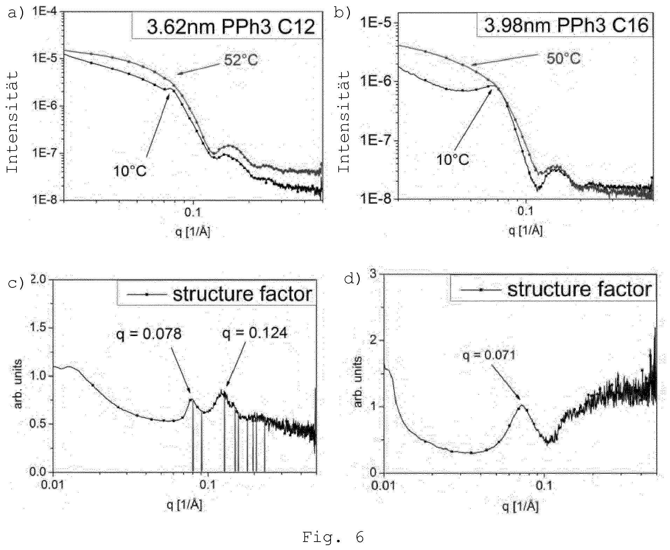

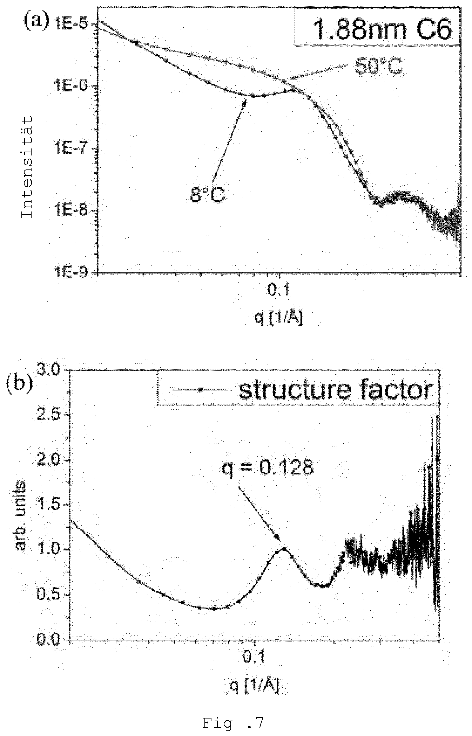

Die Figuren 6 und 7 zeigen SAXS-Messungen hergestellter Kompositmaterialien. Die jeweiligen Strukturfaktoren zeigen, dass sich auch innerhalb der Kompositmaterialien die Agglomerate der Partikel ausbilden. Die q-Werte ähneln den für die Dispersionen gemessenen Werten.

Alle Kompositmaterialien konnten mehrfach aufgeheizt und abgekühlt werden, wobei jedes Mal die entsprechende Transformation der Nanopartikel beobachtet wurde. Um ein besseres Signal für das 1,88 nm C6-Kompositmaterial zu erhalten, wurde für diese Probe eine höhere Konzentration der Partikel in der Emulsion verwendet.

Genauere Messungen des Strukturfaktors ergaben, dass für das System 3,98 nm PPh₃ C16 beim Erhitzen der Übergang von Agglomerat zu freien Partikeln bei 42 °C, beim Abkühlen die Bildung von Agglomeraten bei 35 °C, stattfand. Für 3,62 nm PPh₃ C12 konnten Temperaturen von 52 °C, bzw. 38 °C gemessen werden.

Bei der Bildung von Agglomeraten konnte eine deutliche Farbänderung des Kompositmaterials beobachtet werden.

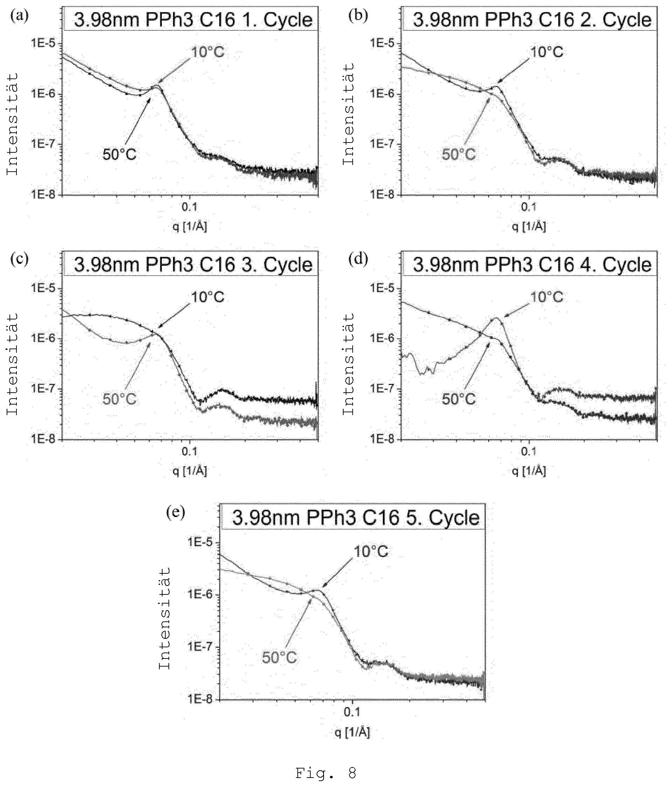

Figur 8 zeigt mehrere SAXS-Messungen für ein Kompositmaterial (3,98 nm PPh₃ C16) für mehrere aufeinanderfolgende Temperaturzyklen. Die Probe war bereits für 1,5 Monate bei Raumtemperatur gelagert worden. Beim Aufheizen wurde die Probe auf 50 °C geheizt und die Temperatur für 25 Minuten gehalten. 5 Minuten nach Erreichen der Temperatur wurde die Messung begonnen. Danach wurde die Probe auf 10 °C gekühlt und diese Temperatur für 25 Minuten gehalten, wobei die Messung nach 5 Minuten begonnen wurde. Beim ersten Aufheizen (Figur 8 a)) waren bei 50 °C noch nicht alle Agglomerate aufgelöst. In den folgenden Zyklen (Figur 8 b) bis e)) sind die Agglomerate bei der hohen Temperatur eindeutig aufgelöst und bilden sich jeweils bei der niedrigen Temperatur wieder.

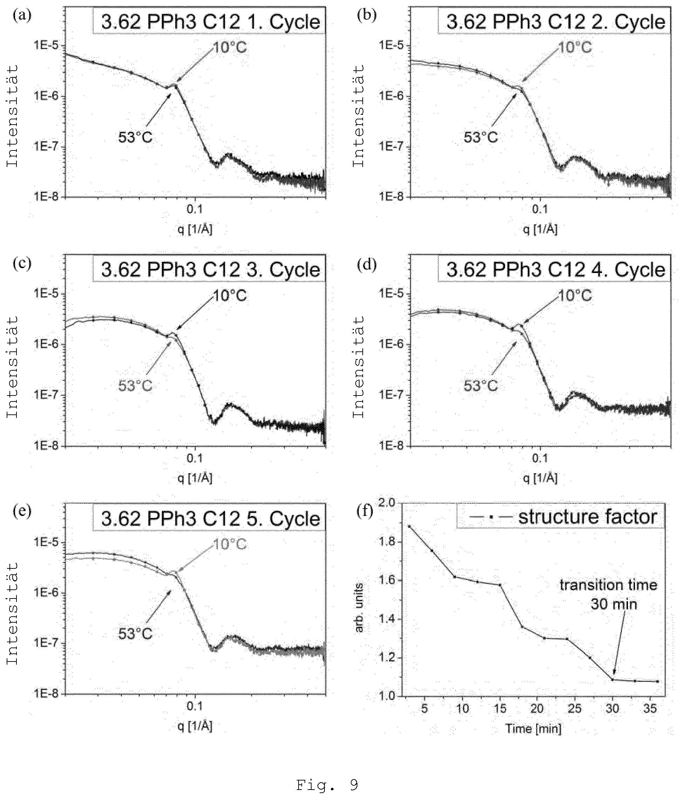

Figur 9 zeigt mehrere SAXS-Messungen für ein Kompositmaterial (3,62 nm PPh₃ C12) für mehrere aufeinanderfolgende Temperaturzyklen. Die Probe war bereits für 1,5 Monate bei Raumtemperatur gelagert worden. Beim Aufheizen wurde die Probe auf 50 °C geheizt und die Temperatur für 25 Minuten gehalten (im ersten Zyklus ca. 35 Minuten). 5 Minuten nach Erreichen der Temperatur wurde die Messung begonnen. Danach wurde die Probe auf 10 °C gekühlt und diese Temperatur für 25 Minuten gehalten, wobei die Messung nach 5 Minuten begonnen wurde. Beim ersten Zyklus (Figur 9 a)) war noch keine vollständige Deagglomeration zu beobachten. Figur 8 f) zeigt die Veränderung des Strukturfaktors im ersten Zyklus gegen die Zeit. Es ist deutlich zu erkennen, dass die Deagglomeration erst nach 30 Minuten abgeschlossen ist. Insofern waren bei Messbeginn in der 5 Minute noch Agglomerate vorhanden.

**Tabelle 1**

| Radius [nm] | Ligand | Lösungsmittel | Agglomeration bei | | |
|---|---|---|---|---|---|
| | | | 0 °C | RT | 50 °C |
| 1,88 | C6 | Dekan | + | - | - |
| 2,65 | C16 | Dekan | + | + | - |
| 3,62 | PPh₃, C12 | Dekan | + | + | - |
| 3,98 | PPh₃, C16 | Dekan | + | + | - |

### Bezugszeichen

- 100: Matrix
- 110: Hohlräume
- 120: Nanopartikel
- 130: Stimulus
- 140: Agglomerate der Nanopartikel

### zitierte Literatur

Born et al Physical Review E 2013, 062313
Geyer et al. Physical Review Letters 2012, 109, 128302

## Patentansprüche

1. Kompositmaterial umfassend
a) eine hydrophile Matrix;
b) Hohlräume, wobei die Hohlräume mindestens eine Art von Nanopartikeln umfassen,
**dadurch gekennzeichnet, dass**
mindestens einer der Hohlräume durch Einwirkung von Temperatur auf das Kompositmaterial von einem ersten Zustand in einen zweiten Zustand überführt werden kann, wobei sich der erste vom zweiten Zustand in der Anordnung der Nanopartikel innerhalb des mindestens einen Hohlraums unterscheidet und
die Nanopartikel bei einem der beiden Zustände agglomeriert vorliegen, wobei
die Hohlräume, mindestens eine Art von Nanopartikeln und mindestens ein unpolares Lösungsmittel umfassen, wobei die mindestens eine Art von Nanopartikel eine lipophile Oberflächenmodifikation aufweist, wobei die Nanopartikel im Lösungsmittel dispergiert sind.

2. Kompositmaterial nach Anspruch 1, **dadurch gekennzeichnet, dass** es sich um plasmonische Nanopartikel handelt.

3. Kompositmaterial nach einem der Ansprüche 1 oder 2, **dadurch gekennzeichnet, dass** die Änderung zwischen den beiden Zuständen reversibel ist.

4. Kompositmaterial nach einem der Ansprüche 1 bis 3, **dadurch gekennzeichnet, dass** die Matrix fest ist, während die Zusammensetzung innerhalb der Hohlräume flüssig oder viskos ist.

5. Kompositmaterial nach einem der Ansprüche 1 bis 4, **dadurch gekennzeichnet, dass** die Nanopartikel Goldnanopartikel sind und die Matrix Agarose ist.

6. Verfahren zur Herstellung eines Kompositmaterials nach einem der Ansprüche 1 bis 5 umfassend die Schritte
a) Bereitstellung einer Emulsion umfassend Nanopartikel in der dispersiven Phase, wobei die Nanopartikel eine lipophile Oberflächenmodifikation aufweisen;
b) Herstellen einer Mischung umfassend hydrophile Matrix oder ein Vorläufer davon;
c) Verfestigung der Matrix, wobei die Mizellen der Emulsion Hohlräume in der Matrix bilden, welche mit der dispersiven Phase der Emulsion gefüllt sind.

7. Verfahren nach Anspruch 6, **dadurch gekennzeichnet, dass** die Emulsion eine Mikroemulsion oder Nanoemulsion ist.

8. Verfahren nach einem der Ansprüche 6 oder 7, **dadurch gekennzeichnet, dass** die Nanopartikel Goldnanopartikel sind und die Matrix Agarose ist.

## Claims

1. Composite material comprising
a) a hydrophilic matrix;
b) cavities, with the cavities comprising at least one kind of nanoparticles,
**characterized in that**
at least one of the cavities can be converted, by action of temperature on the composite material, from a first state into a second state, with the first state differing from the second state in the arrangement of the nanoparticles within the at least one cavity, and
the nanoparticles are present in agglomerated form in one of the two states, with
the cavities comprising at least one kind of nanoparticles and at least one non-polar solvent, with the at least one kind of nanoparticles having a lipophilic surface modification, with the nanoparticles being in dispersion in the solvent.

2. Composite material according to Claim 1, **characterized in that** the nanoparticles are plasmonic nanoparticles.

3. Composite material according to either of Claims 1 and 2, **characterized in that** the change between the two states is reversible.

4. Composite material according to any of Claims 1 to 3, **characterized in that** the matrix is solid, while the composition within the cavities is liquid or viscous.

5. Composite material according to any of Claims 1 to 4, **characterized in that** the nanoparticles are gold nanoparticles and the matrix is agarose.

6. Process for producing a composite material according to any of Claims 1 to 5, comprising the steps of
a) providing an emulsion comprising nanoparticles in the dispersive phase, with the nanoparticles having a lipophilic surface modification;
b) producing a mixture comprising hydrophilic matrix or a precursor thereof;
c) solidifying the matrix, with the micelles of the emulsion forming cavities in the matrix that are filled with the dispersive phase of the emulsion.

7. Process according to Claim 6, **characterized in that** the emulsion is a microemulsion or nanoemulsion.

8. Process according to either of Claims 6 and 7, **characterized in that** the nanoparticles are gold nanoparticles and the matrix is agarose.

## Revendications

1. Matériau composite, comprenant
a) une matrice hydrophile ;
b) des espaces creux, les espaces creux comprenant au moins un type de nanoparticules,
**caractérisé en ce qu'**au moins l'un des espaces creux peut passer d'un premier état dans un deuxième état par l'action de la température sur le matériau composite, le premier état se distinguant du deuxième état par l'agencement des nanoparticules à l'intérieur dudit au moins un espace creux et
les nanoparticules se trouvent sous forme agglomérée dans l'un des deux états
les espaces creux comprenant au moins un type de nanoparticules et au moins un solvant non polaire, ledit au moins un type de nanoparticules présentant une modification de surface lipophile, les nanoparticules étant dispersées dans le solvant.

2. Matériau composite selon la revendication 1, **caractérisé en ce qu'**il s'agit de nanoparticules plasmoniques.

3. Matériau composite selon l'une des revendications 1 ou 2, **caractérisé en ce que** le passage entre les deux états est réversible.

4. Matériau composite selon l'une des revendications 1 à 3, **caractérisé en ce que** la matrice est solide alors que la composition à l'intérieur des espaces creux est liquide ou visqueuse.

5. Matériau composite selon l'une des revendications 1 à 4, **caractérisé en ce que** les nanoparticules sont des particules d'or et la matrice est de l'agarose.

6. Procédé pour la préparation d'un matériau composite selon l'une des revendications 1 à 5, comprenant les étapes :
a) mise à disposition d'une émulsion comprenant des nanoparticules dans la phase dispersive, les nanoparticules présentant une modification de surface lipophile ;
b) préparation d'un mélange comprenant une matrice hydrophile ou un précurseur de celle-ci ;
c) solidification de la matrice, les micelles de l'émulsion formant des espaces creux dans la matrice, lesquels espaces creux sont remplis de la phase dispersive de l'émulsion.

7. Procédé selon la revendication 6, **caractérisé en ce que** l'émulsion est une microémulsion ou une nanoémulsion.

8. Procédé selon l'une des revendications 6 ou 7, **caractérisé en ce que** les nanoparticules sont des particules d'or et la matrice est de l'agarose.
